# EUROPEAN PATENT APPLICATION

(11) **EP 4 201 826 A1**
(43) Date of publication of application: **28.06.2023**
(21) Application number: 21857784.9
(22) Date of filing: 21.08.2021
(51) Int. Cl.: B65B 33/02, B65B 67/00

(54) **FILM-GLUING BOX**

(30) Priority: 21.08.2020 CN 202021784271 U; 21.08.2020 CN 202021785748 U; 16.06.2021 CN 202121344727 U
(71) Applicant: Shenzen KAC Technology Co., Ltd., Shenzhen, Guangdong 518000 (CN)
(72) Inventor: LIU, Pinyuan, Shenzhen Guangdong 518000 (CN)
(74) Representative: Zaboliene, Reda
(86) International application number: PCT/CN2021/113926
(87) International publication number: WO 2022/037697

(57) **Abstract**

A screen protector pasting box is provided, which includes a connecting member, an upper housing, a lower housing, a rolling member, two guide rails and a slider. The upper housing may be covered on the lower housing. The connecting member, which accommodates an electronic device, is connected to and accommodated in the lower housing. A positioning portion, for positioning the auxiliary positioning element, is disposed on the connecting member. The guide rails are disposed on the inner side of the lower housing. The rolling member can slide relative to the guide rails. Two sides of the upper housing relative to the guide rails are connected to the slider. The slider is rotatably connected to the rolling member and can slide relative to the guide rails. Thus, no bubbles and high efficiency can be ensured when sticking the film.

## Description

### TECHNICAL FIELD

The present disclosure relates generally to the technical field of film pasting, and more particularly to a screen protector pasting box.

### BACKGROUND

With the continuous development of society, more and more people use touchscreen smartphones. In order to prevent phones from damage and to increase the overall service life of phones, a film is usually pasted on the screen. However, if not properly pasted, air bubbles may exist between the film and the phone screen. Further, the pressure applied to the screen to wipe off air bubbles cannot be too high, otherwise the screen may be damaged. Therefore, film pasting requires high-level skills, and a device that can assist in pasting the film and prevent air bubbles from existing is in demand.

### SUMMARY

To overcome the defect that air bubbles may easily appear in the existing film pasting, a screen protector pasting box is provided.

An embodiment of the present disclosure provides a screen protector pasting box for pasting a film to an electronic device. The film includes an auxiliary positioning element and a screen protector connected to the auxiliary positioning element. The screen protector pasting box includes a connecting member, an upper housing, a lower housing, a rolling member, two guide rails and a slider. The upper housing can be covered on the lower housing. The connecting member is connected to and accommodated in the lower housing. An electronic device to be pasted can be accommodated in the connecting member. The connecting member is provided with a positioning portion for positioning the auxiliary positioning element of the film. The guide rails are disposed on two opposite inner sides of the lower housing, and the rolling member can slide with respect to the guide rails. Two sides of the upper housing facing the guide rails are connected to the slider, and the slider is rotatably connected to the rolling member. The slider can slide with respect to the guide rails, and two sides of the upper housing connected to the slider are disposed between the guide rails.

Preferably, one end of the upper housing connected to the slider is rotatably connected to the lower housing, and the other end thereof can be opened or closed with respect to the lower housing.

Preferably, the slider is cylindrical and rotatably connected to the guide rails.

Preferably, the screen protector pasting box further includes a limiting element disposed at a position of the upper housing close to the slider; the connecting member defines a recess corresponding to the limiting element; when the slider slides to one end of the guide rails, the limiting element is rotatably against the recess, the upper housing is covered in the lower housing.

Preferably, two slots are defined by the connecting member, two sides of the lower housing and the two guide rails jointly. The slots are configured for the limiting element being movably received therein.

Preferably, the surface where the lower housing is connected to the electronic device is defined as a placing plane, and the surface where the positioning portion is connected to the auxiliary positioning element is defined as a positioning plane. The positioning plane and the placing plane are relatively inclined. The rolling member can slide from the side with a smaller angle between the positioning plane and the placing plane to the other side with a larger angle between the positioning plane and the placing plane.

Preferably, the connecting member defines an accommodating space for accommodating an electronic device. The positioning portion includes a first positioning member or a first positioning hole disposed at one end of the connecting member. The auxiliary positioning element includes a through hole corresponding to the first positioning member, or includes a connecting column corresponding to the first positioning hole.

Preferably, the positioning portion further includes a second positioning member, and the first positioning member and the second positioning member are disposed on two opposite ends of the connecting member. Or, the positioning portion further includes a second positioning hole, and the first positioning hole and the second positioning hole are disposed on two opposite ends of the connecting member. Or, the first positioning member and the second positioning hole are disposed on two opposite ends of the connecting member. Or, the first positioning hole and the second positioning member are disposed on two opposite ends of the connecting member. The auxiliary positioning element includes a through hole corresponding to the second positioning member, or includes a connecting column corresponding to the second positioning hole.

Preferably, the positioning plane includes a first locating surface. Or the positioning plane includes the first locating surface and a second locating surface. The first positioning member or the first positioning hole defines the first locating surface, and the second positioning member or the second positioning hole defines the second locating surface. The auxiliary positioning element is positioned on the first locating surface, or positioned on the first locating surface and the second locating surface.

Preferably, where the positioning plane only includes the first positioning member or the first positioning hole, the positioning plane includes the first locating surface. In this case, when an electronic device is placed in the accommodating space, the height of the first locating surface is higher than that of the screen of the electronic device, and the placing plane is parallel to a horizontal plane. Or, the height of the first locating surface is equal to that of the second locating surface, and the placing plane forms an angle with the horizontal plane. Or, the height of the first locating surface is higher than that of the second locating surface, and the placing plane is parallel to the horizontal plane.

Preferably, the first positioning member is closely matched with the through hole.

Preferably, the film can be placed in a space formed by the upper housing closed on the lower housing.

Preferably, the number of the first positioning members or the number of the first positioning holes is two. The number of the second positioning members or the number of the second positioning holes is one.

Preferably, the rolling member includes a first rolling part and a second rolling part disposed on two ends of the first rolling part, and the hardness of the second rolling part is higher than that of the first rolling part. Or the second rolling part protrudes with respect to the first rolling part.

Preferably, the connecting member is detachably connected to the lower housing.

Compared with the existing art, the screen protector pasting box and the film have the following beneficial effects.

The film includes an auxiliary positioning element and a screen protector connected to the auxiliary positioning element. The screen protector pasting box includes a box body that includes a lower housing and a connecting member connected to and accommodated in the lower housing, and an electronic device can be accommodated in the connecting member. The connecting member includes a positioning portion for positioning the auxiliary positioning element of the film and attaching the screen protector to the screen of an electronic device and for the screen protector being rolled by the rolling member. The rolling force thereof is uniform and controllable to obtain a better film-sticking effect. In addition, guide rails are disposed on the lower housing such that the slider can be slidably connected to the guide rails, which improves the stability of the rolling member when rolling, further ensures the film-sticking effect, prevents the generation of air bubbles during film sticking, and improves the integrity of film sticking.

One end of the upper housing connected to the slider is rotatably connected to the lower housing, and the other end thereof can be opened or closed with respect to the lower housing, which is more convenient for a user to operate the screen protector pasting box just like opening or closing a normal box, and user experience is thus improved.

The rotating and sliding connection of the upper housing and the lower housing is achieved by the same component, which reduces the difficulty of preparing the screen protector pasting box and simplifies the structure thereof.

The limiting element is disposed on the upper housing, and a recess is defined on the lower housing. During the process of pulling the upper housing to slide the rolling member, the limiting element is clamped in the recess, such that the rolling member can slide relatively stably with respect to the lower housing, and the film-sticking effect can be further improved.

The film can be placed in the space formed by the upper housing closed on the lower housing for storing, such that the screen protector pasting box is not only a tool for film sticking but also a packaging box for packaging and storage. An additional packaging box to package the film is no longer required, which enriches the function of the screen protector pasting box and saves production costs.

### BRIEF DESCRIPTION OF DRAWINGS

FIG. 1 is a perspective view of a screen protector pasting box in a closed state according to a first embodiment;
FIG. 2 is a perspective view of the screen protector pasting box in an open state according to the first embodiment;
FIG. 3 is an exploded view of the screen protector pasting box according to the first embodiment;
FIG. 4 is a perspective view of a film and a connecting member of the screen protector pasting box according to the first embodiment;
FIG. 4A is a perspective view of the film and the connecting member of the screen protector pasting box according to a first alternative embodiment;
FIG. 4B is a perspective view of the film and the connecting member of the screen protector pasting box according to a second alternative embodiment;
FIG. 4C is a perspective view of the film and the connecting member of the screen protector pasting box according to a third alternative embodiment;
FIG. 4D is a perspective view of the film and the connecting member of the screen protector pasting box according to a fourth alternative embodiment;
FIG. 4E is a perspective view of the film and the connecting member of the screen protector pasting box according to a fifth alternative embodiment;
FIG. 5 is another exploded view of the screen protector pasting box according to the first embodiment;
FIG. 5A is a schematic diagram of a rolling member of the screen protector pasting box according to the first embodiment;
FIG. 5B is a schematic diagram of the rolling member of the screen protector pasting box according to an alternative embodiment;
FIG. 6 is an exploded view of the screen protector pasting box according to the first embodiment;
FIG. 7 is a schematic diagram illustrating the rotation of the screen protector pasting box according to the first embodiment;
FIG. 8 is a schematic diagram of an upper housing and a lower housing in a separated state of the screen protector pasting box according to the first embodiment;
FIG. 9 is an exploded view of the screen protector pasting box according to the first embodiment;
FIG. 10 is another perspective view of the screen protector pasting box in an open state according to the first embodiment;
FIG. 11 is another perspective view of the screen protector pasting box in an open state according to the first embodiment;
FIG. 12 is an exploded view of the screen protector pasting box according to a second embodiment;
FIG. 13 is a schematic diagram of an inner side of a positioning member of the screen protector pasting box according to the second embodiment;
FIG. 14 is another schematic diagram of the inner side of the positioning member of the screen protector pasting box according to the second embodiment;
FIG. 15 is an exploded view of a film according to a third embodiment.

### Numerical Reference Identification

10. screen protector pasting box; 20. electronic device; 21, film; 22. screen protector; 23. hole; 23a. connecting column; 24. auxiliary positioning element; 30. box body; 31. connecting member; 311. recess; 312. inclined surface; 313. accommodating space; 314. groove; 315. block; 316. slot; 317. concave portion; 318. engagement hole; 32. first positioning member; 321. first column; 322. first stopper; 323. first locating surface; 32a. first positioning hole; 323a. first locating surface; 33. second positioning member; 331. second column; 332. second stopper; 333. second locating surface; 33a. second positioning hole;
333a. second locating surface; 34. protrusion; 35. guide rail; 36. lower housing; 361. engagement block; 38. chamber; 39. guide groove; 40. rolling member; 401. first rolling part; 402. second rolling part; 41. rotating shaft; 50. moving assembly; 51. upper housing; 52. slider; 53. limiting element; 531. arc surface; 70. screen protector pasting box; 71. connecting member; 24a. auxiliary positioning element; 32b. first positioning member; 721. top board; 722. side board; 73. positioning portion; 76. lug; 80. film; 81. auxiliary positioning element; 82. screen protector; 83. release film; 831. tip.

### DETAILED DESCRIPTION

In order to make the objectives, technical solutions, and advantages of the present disclosure clearer, the present disclosure is further described in detail below with reference to the accompanying drawings and embodiments. It should be understood that the specific embodiments described herein are provided for illustration only, and not for the purpose of limiting the disclosure.

It should be noted that, when an element is referred to as being "fixed to" another element, it can be directly on the other element or intervening elements may also exist. When an element is referred to as being "connected" to another element, it can be directly connected to the other element or intervening elements may also exist. The terms "vertical", "horizontal", "left", "right" and similar expressions are used herein for illustrative purposes only.

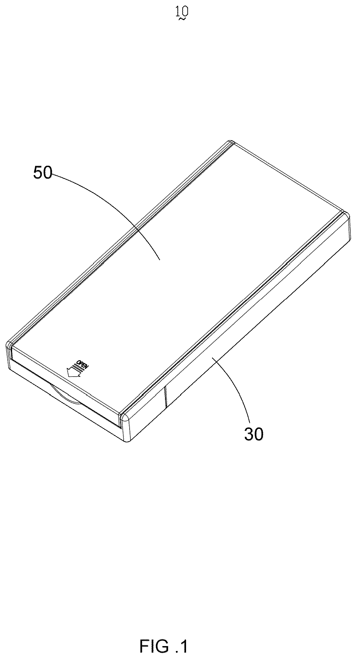

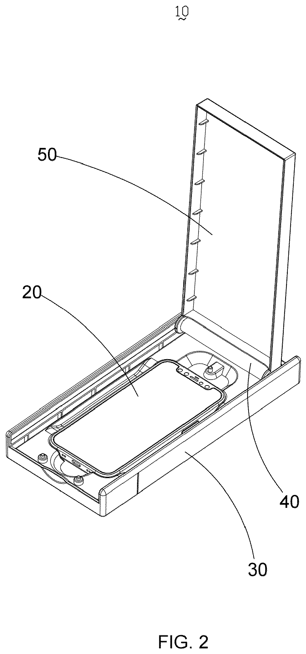

Referring to FIGs. 1 and 2, a first embodiment of the present disclosure provides a screen protector pasting box 10 for attaching a film to an electronic device 20. The screen protector pasting box 10 includes a box body 30 and a rolling member 40, and the rolling member 40 can slide with respect to the box body 30. The electronic device 20 may be any one of a mobile phone, a tablet computer or a game console. The film 21 for the electronic device 20 includes a screen protector 22 and an auxiliary positioning element 24 connected with the screen protector 22.

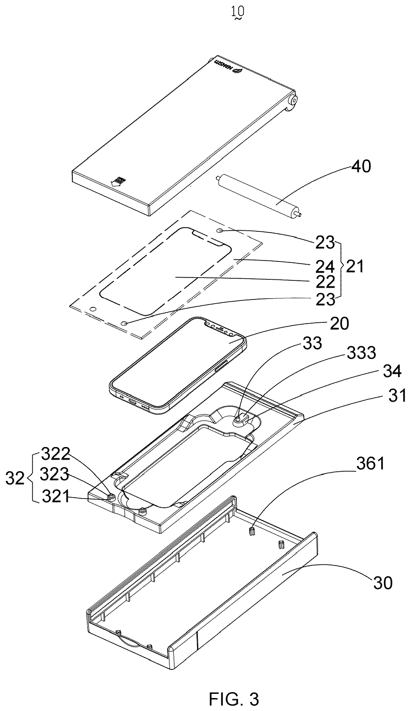

Referring to FIG. 3, the box body 30 includes a connecting member 31 and a positioning portion. The positioning portion is configured to position the auxiliary positioning element 24 of the film 21 to attach the screen protector 22 to the screen of the electronic device 20. The positioning portion includes a first positioning member 32 and a second positioning member 33. The first positioning member 32 and the second positioning member 33 are disposed on two opposite ends of the surface of the connecting member 31, and the electronic device 20 is located on the connecting member 31 and located between the first positioning member 32 and the second positioning member 33, that is, the first positioning member 32 and the second positioning member 33 are located on two sides of the electronic device 20, or located on two sides of the electronic device 20 in the length direction thereof. The rolling member 40 can slide between the first positioning member 32 and the second positioning member 33. Thus, the screen protector 22 can be uniformly pressed to the surface of the electronic device 20 by the rolling member 40, and air bubbles can be prevented during the film-sticking process.

Referring to FIG. 3, the screen protector 22 corresponds to the screen of the electronic device 20 and the auxiliary positioning element 24 is connected to the screen protector 22. The auxiliary positioning element 24 defines one or more holes 23 at the positions corresponding to the first positioning member 32 and the second positioning member 33, and the film 21 can be fixed through the first positioning member 32 and the second positioning member 33. The first positioning member 32 includes a first column 321 and a first stopper 322. The first column 321 and the first stopper 322 are cylindrical in structure and the axial diameter of the first column 321 is greater than that of the first stopper 322. The side of the first stopper 322 connected to the first column 321 is the first locating surface 323, i.e., the surface of the first column 321 defines the first locating surface 323, and the first stopper 322 is used to penetrate the hole 23 to place the auxiliary positioning element 24 on the first locating surface 323. The connecting member 31 extends toward a side thereof close to the rolling member 40 to form a protrusion 34, and the surface of the protrusion 34 defines a second locating surface 333. The second positioning member 33 is disposed on the protrusion 34, and the second positioning member 33 passes through the hole 23 and the auxiliary positioning element 24 is placed on the second locating surface 333. In this embodiment, the height of the first locating surface 323 is higher than that of the second locating surface 333, i.e., the first locating surface 323 and the second locating surface 333 are defined as a positioning plane, and the side of the connecting member 31 connected to the rear surface of the electronic device 20 is defined as a placing plane.

Optionally, in some other embodiments, the second positioning member 33 is directly disposed on the connecting member 31, i.e., the protrusion 34 is not arranged individually, and one end of the auxiliary positioning element 24 directly abuts against and is connected to the surface of the connecting member 31. In this case, the surfaces of the first locating surface 323 and the connecting member 31 define a positioning plane, and the side of the connecting member 31 connected to the rear surface of the electronic device 20 is defined as a placing plane.

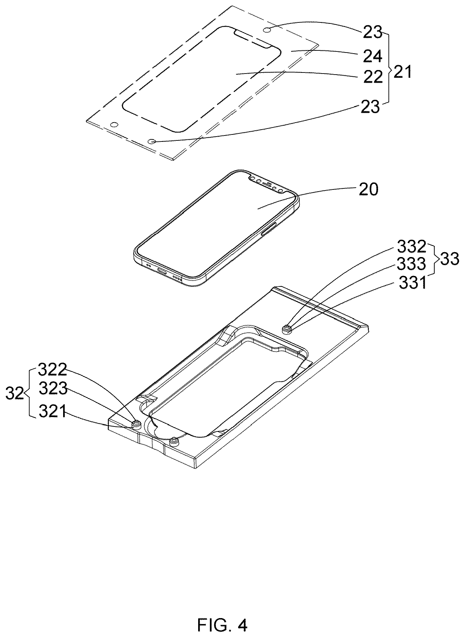

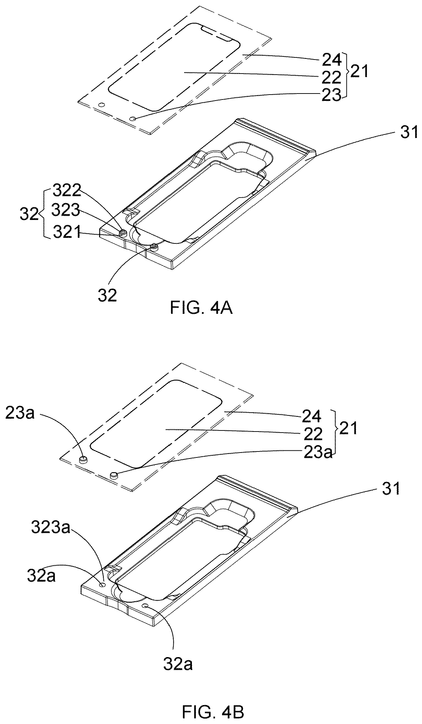

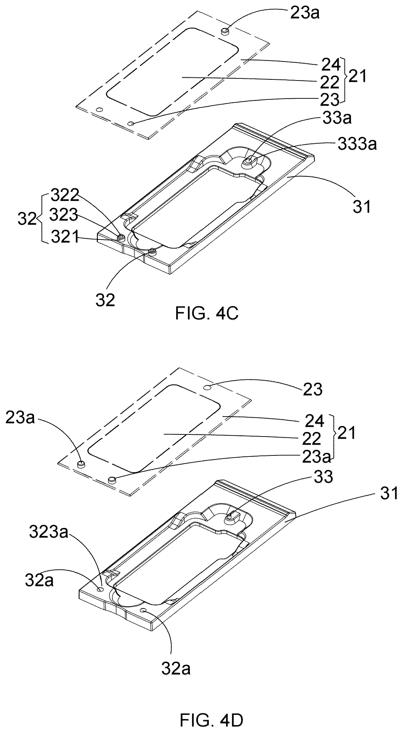

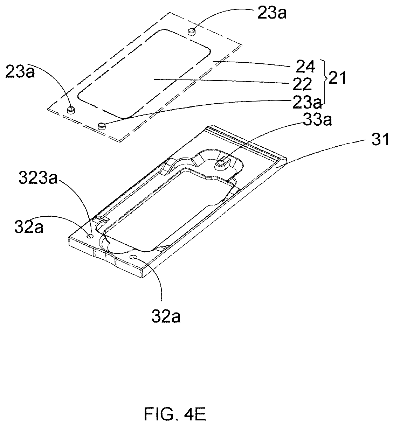

Referring to FIG. 4, optionally, in some other embodiments, the shape of the second positioning member 33 is the same as that of the first positioning member 32. The second positioning member 33 includes a second column 331 and a second stopper 332. The second column 331 and the second stopper 332 are cylindrical in structure and the axial diameter of the second column 331 is greater than that of the second stopper 332. The surface of the second column 331 defines the second locating surface 333, and the second stopper 332 is configured to penetrate the hole 23 to place the auxiliary positioning element 24 on the second locating surface 333. In this embodiment, the height of the first column 321 is greater than that of the second column 331, i.e., the height of the first locating surface 323 is higher than that of the second locating surface 333, such that the positioning plane can form an angle with the horizontal plane.

Optionally, in some other embodiments, the first locating surface 323 and the second locating surface 333 define a positioning plane, and the side of the connecting member 31 connected to the rear surface of the electronic device 20 is defined as a placing plane. Or, where the height of the screen of the electronic device 20 is higher than that of the surface of the connecting member 31, the surface of the screen of the electronic device 20 is defined as the placing plane, and the placing plane is located between the first positioning member 32 and the second positioning member 33. The positioning plane and the placing plane are relatively inclined. Optionally, the height of the protrusion 34 is equal to that of the first column 321 or the height of the first column 321 is equal to that of the second column 331, i.e., the first locating surface 323 and the second locating surface 333 are on the same plane. In this case, the side of the connecting member 31 connected to the electronic device 20 is an inclined plane, i.e., the placing plane is an inclined plane. Optionally, in some embodiments, it is only necessary to satisfy the condition that the film 21 and the surface of the electronic device 20 are relatively inclined.

Referring to FIG. 4A, as a first variant embodiment, the positioning portion includes only the first positioning member 32, and the second positioning member 33 is not provided. Also, there is no need to arrange the protrusion 34 in this case. In this embodiment, due to the lack of the second positioning member 33, in order to better align the film 21 with the screen of the electronic device 20, the number of the first positioning member 32 is set as two. Accordingly, the auxiliary positioning element 24 defines two holes 23 at the positions thereof corresponding to the positions of the first positioning members 32, and each of the first positioning members 32 is closely matched with each of the holes 23. After being matched, the two cannot rotate randomly. Of course, the number of the first positioning member 32 can also be other values, such as one, three or more.

Optionally, in order to further realize the positioning of the film 21 with respect to the screen of the electronic device 20, the auxiliary positioning element 24 can be configured to have a certain rigidity, such that the auxiliary positioning element 24 can have a fixed shape and will not be deformed randomly after connected to the first positioning member 24.

In this embodiment, the positioning plane includes a first locating surface 323. In this case, when the electronic device 20 is placed in the connecting member 31, the height of the first locating surface 323 is higher than that of the screen surface of the electronic device 20, and the placing plane is flush with the horizontal plane such that the first locating surface 232 is inclined with respect to the placing plane.

Referring to FIG. 4B, as a second variant embodiment, the positioning portion includes only the first positioning hole 32a, i.e., the first positioning member 32 is replaced by the first positioning hole 32a. In this case, the connecting column 23a needs to be disposed on the auxiliary positioning element 24 to be coupled with the first positioning hole 32a. The positioning of the auxiliary positioning element 24 is achieved by inserting the connecting column 23a into the first positioning hole 32a. In this case, the first positioning hole 32a defines the first locating surface 323a. Understandably, if the connecting column 23a is fully inserted into the first positioning hole 32a, the surface of the first positioning hole 32a is defined as the first locating surface 323a. If the height of the connecting column 23a is greater than the depth of the first positioning hole 32a, in this case, the connecting column 23a is supported by the bottom of the first positioning hole 32a, and the bottom of the first positioning hole 32a can be defined as the first locating surface 323a. The number of the first positioning hole 32a can be set to be equal to the number of the first positioning hole 32.

Referring to FIG. 4C, as a third variant embodiment, the positioning portion includes a first positioning member 32 and a second positioning hole 33a. i.e., the second positioning member 33 is replaced by the second positioning hole 33a, and the auxiliary positioning element 24 may be provided with a connecting column corresponding to the second positioning hole 33a. In this case, the second positioning hole 33a defines the second locating surface 333a.

Referring to FIG. 4D, as a fourth variant embodiment, the positioning portion includes a first positioning hole 32a and a second positioning member 33. The first positioning hole 32a and the second positioning member 33 are disposed at two ends of the surface of the connecting member 31.

Referring to FIG. 4E, as a fifth variant embodiment, the positioning portion includes a first positioning hole 32a and a second positioning hole 33a. The first positioning hole 32a and the second positioning hole 33a are defined at two ends of the surface of the connecting member 31.

The number of the second positioning member 33 or the second positioning hole 33a is set as one.

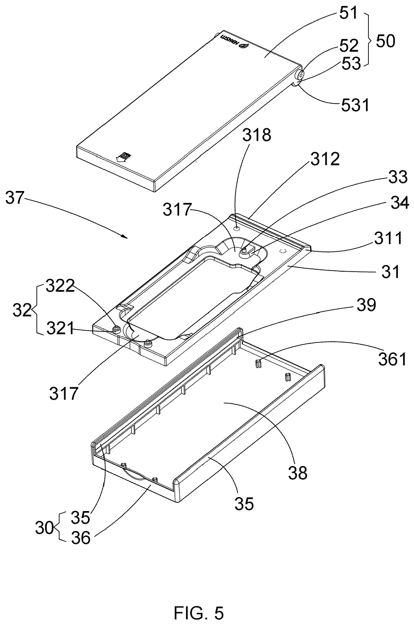

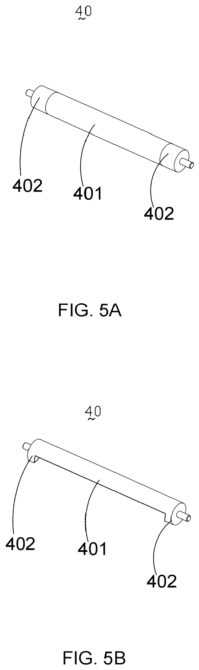

Referring to FIGs. 5, 6 and 7, the screen protector pasting box 10 includes a moving assembly 50. The moving assembly 50 is rotatably connected to the rolling member 40 and can slide with respect to the box body 30. The moving assembly 50 can slide between the first positioning member 32 and the second positioning member 33. The moving assembly 50 includes an upper housing 51 rotatably connected to the rolling member 40. One end of the upper housing 51 is rotatably connected to the rolling member 40, and the upper housing 51 can be accommodated in the box body 30.

The moving assembly 50 includes a slider 52. The slider 52 is a hollow columnar structure and connected to two sides of the upper housing 51 away from the first positioning member 32. In this embodiment, the rolling member 40 is made of silica gel or rubber. The distance between the rolling member 40 and the connecting member 31 is 1-2mm, preferably 1.5 mm. The rolling member 40 is in contact with the surface of the electronic device 20. When the rolling member 40 slides on the surface of the electronic device 20, the surface of the electronic device 20 is pressed by the rolling member 40. Two opposite sides of the rolling member 40 are provided with a rotating shaft 41. The rotating shaft 41 passes through the upper housing 51 and the slider 52 sequentially and can slide with respect to the box body 30. Optionally, in some other embodiments, the rolling member 40 may be replaced by a slider or a scraper blade, as long as it can press and slide on the surface of the film 21.

Referring to FIG. 5A, as a variant embodiment, the rolling member 40 includes a first rolling part 401 and a second rolling part 402 disposed at two sides of the first rolling part 401. The rolling member 40 is a long columnar structure, and the first rolling part 401 and the second rolling part 402 are separated along the length direction of the rolling member 40. The hardness of the second rolling part 402 is higher than that of the first rolling part 401. Thus, the first rolling part 401 and the second rolling part 402 form different pressure values during the pressing process of the rolling member 40, and the pressure value of the second rolling part 402 is greater than that of the first rolling part 401, which is especially suitable for electronic devices having a curved screen.

Referring to FIG. 5B, the second rolling part 402 protrudes with respect to the first rolling part 401, and the second rolling part 402 corresponds to the curved screen area of the electronic device 20.

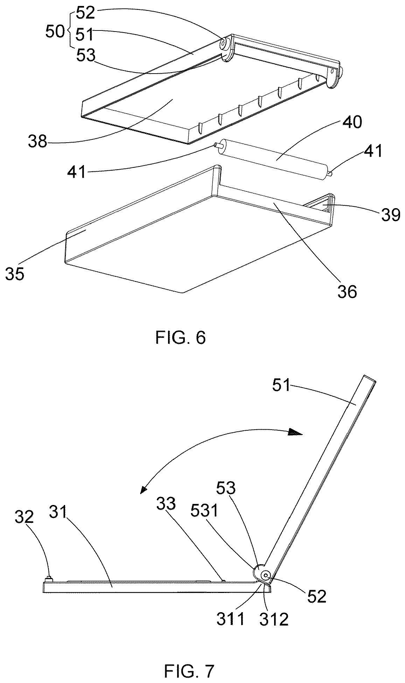

Referring to FIGs. 5 and 7, the moving assembly 50 further includes a limiting element 53 connected to one end of the upper housing 51. The limiting element 53 is disposed at the position of the upper housing 51 close to the slider 52, and the limiting element 53 protrudes toward the connecting member 31. The connecting member 31 defines a recess 311 corresponding to the limiting element 53. When the slider 52 slides to the side close to the second positioning member 33, the limiting element 53 rotates and abuts against the recess 311. With this design, the upper housing 51 needs to rotate until the limiting element 53 abuts against the recess 311, in which case the upper housing 51 can slide relatively on the box body 30 through the rolling member 40. An angle is formed by the upper housing 51 and the box body 30, thus a user can clearly and intuitively see the film-sticking process of the electronic device 20, and the film-sticking operation will not be affected.

The limiting element 53 includes an arc surface 531, the recess 311 includes an inclined surface 312, and the arc surface 531 abuts against the inclined surface 312. With this design, the recess 311 abuts against the inclined surface 312, such that the upper housing 51 and the box body 30 are relatively inclined. Only when the upper housing 51 slides to the position of the recess 311 and the recess 311 leaves space for the limiting element 53 to rotate, can the upper housing 51 rotate with respect to the box body 30.

The box body 30 includes a lower housing 36. The lower housing 36 accommodates the connecting member 31 and the lower housing 36 is detachably connected to the connecting member 31. The lower housing 36 includes two guide rails 35, and the upper housing 51 can slide on the guide rails 35. A chamber 38 is defined by the lower housing 36 and two opposite sides of the upper housing 51, the chamber 38 accommodates the electronic device 20 and the connecting member 31, and the film 21 can be accommodated in the box body 30. When the upper housing 51 slides on the guide rails 35, the limiting element 53 always abuts against the connecting member 31. An engagement block 361 may be disposed on the lower housing 36, and an engagement hole 318 may be defined on the connecting member 318 for engaging the engagement block 361. Thus, a detachable connection is realized by the engagement block 361 coupled with the engagement hole 318.

Referring to FIG. 5 again, the screen protector pasting box 10 includes at least a concave portion disposed on the connecting member 31, and the concave portion 317 corresponds to a power key area, a volume key area, or a power socket area of the electronic device 20. In this embodiment, the number of the concave portion 317 is two, one concave portion 317 is disposed between two first positioning members 32, and the other concave portion 317 is disposed at the area of the second positioning member 33. The second positioning member 33 is disposed on the protrusion 34, and the protrusion 34 is accommodated in the concave portion 317.

A guide groove 39 is disposed at two opposite sides of the two guide rails 35 for sliding the slider 52, the guide groove 39 is matched with the slider 52, and the upper housing 51 is accommodated between the two guide rails 35. The inner walls of two opposite sides of the guide groove 39 can also limit the moving distance of the slider 52.

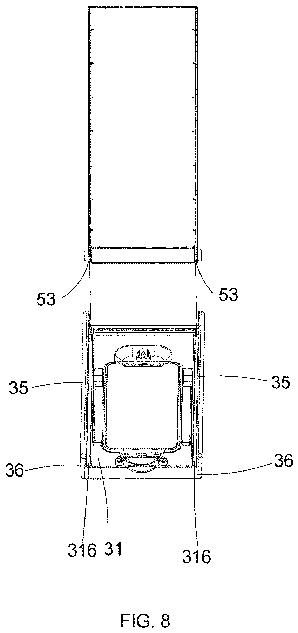

Referring to FIG. 8, a slot 316 is defined by the connecting member 31, the guide rails 35 and two sides of the lower housing 36 jointly, and the limiting element 53 can be movably received in the slot 316.

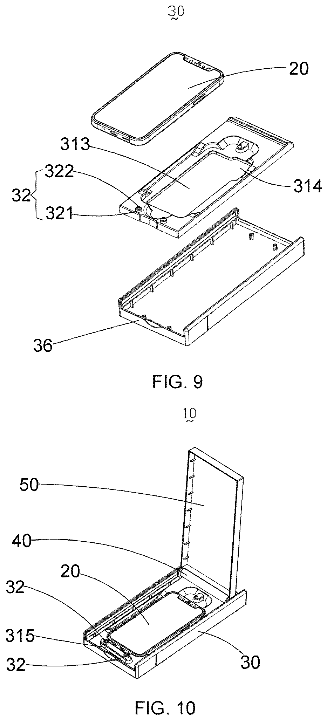

Referring to FIG. 9, the box body 30 defines an accommodating space 313 formed by a surface depression of the connecting member 31. The accommodating space 313 is configured for accommodating the electronic device 20. A groove 314 is defined in the accommodating space 313 at the position corresponding to the camera of the electronic device 20, and the groove 314 is configured for accommodating the camera of the electronic device 20.

Referring to FIG. 10, optionally, in some other embodiments, the connecting member 31 protrudes toward the rolling member 40 to form a block 315, and the first positioning member 32 is disposed on the block 315. The block 315 is higher than the surface of the electronic device 20 and the rolling member 40 abuts against the block 315.

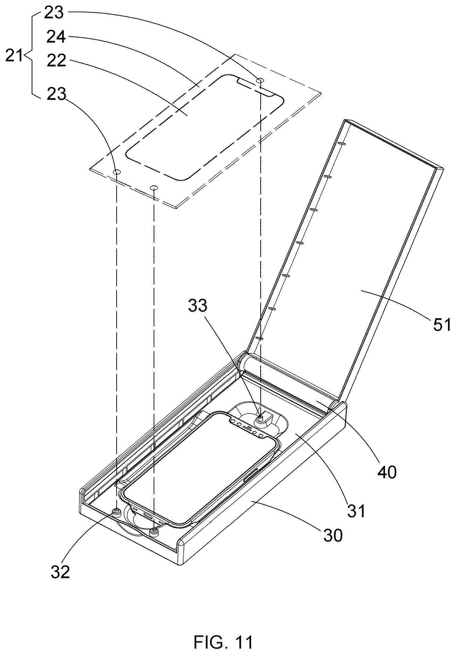

Referring to FIG. 11, when in use, the end of the upper housing 51 connected to the rolling member 40 is rotated around the box body 30. The electronic device 20 is placed on the connecting member 31. The film 21 is placed on the surface of the electronic device 20 through the first positioning member 32 and the second positioning member 33. The rolling member 40 presses the surface of the film 21 by sliding the rolling member 40 from the second positioning member 33 to the first positioning member 32.

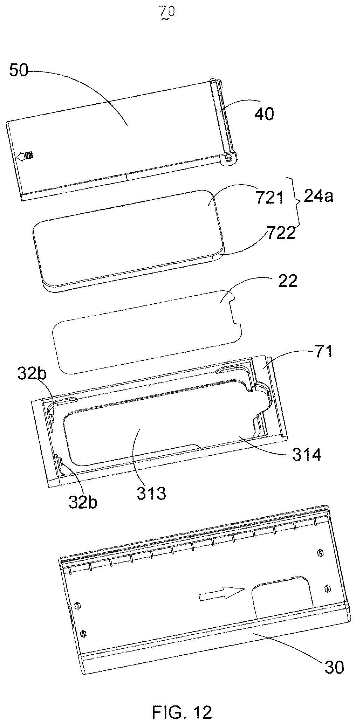

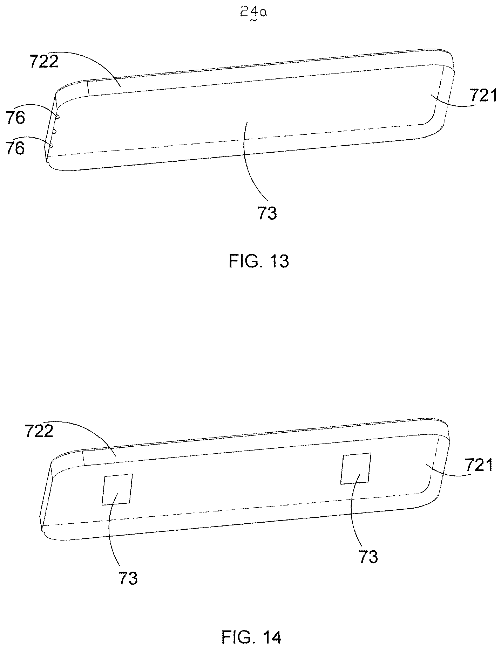

Referring to FIGs. 12 and 13, a second embodiment of the present disclosure provides a screen protector pasting box 70, which differs from the screen protector pasting box 10 of the first embodiment and the variant embodiments thereof mainly in the structure of the connecting member 71. The positioning portion includes a first positioning member 32b disposed on an inner wall of the accommodating space 313, and the first positioning member 32b is resilient and configured for overlapping one end of the auxiliary positioning element 24a. In this case, the first positioning member 32b defines the positioning plane. When pasting, the auxiliary positioning element 24a corresponds to the screen of an electronic device 20, the auxiliary positioning element 24a is overlapped on the first positioning member 32b, and the first positioning member 32b makes the auxiliary positioning member 24a inclined with respect to the placing plane. During the process of pressing by means of the rolling member 40, since the first positioning member 32b is resilient, when the auxiliary positioning element 24a is pressed by the rolling member 40, the auxiliary positioning element 24a presses the first positioning member 32b to deform, such that one end of the initial position of the screen protector 22 is also attached to the screen of the electronic device 20.

In this embodiment, the auxiliary positioning element 24a includes a top board 721 facing the screen of the electronic device 20 and a side board 722 connected to the top board 721, and the top board 721 and the side board 722 jointly define a rectangular frame structure with an opening. The space defined by the side board 722 and the top board 721 matches the outer contour size of the electronic device 20, and the side board 722 can be sleeved on the side of the electronic device 20 to realize the positioning of the auxiliary positioning element 24a with respect to the electronic device 20. When pasting, the auxiliary positioning element 24a is buckled on the electronic device 20. The screen protector 22 is detachably connected to the top board 721.

Referring to FIG. 14, the inner surface of the top board 721 close to the screen of the electronic device 20 defines a positioning plane, and the auxiliary positioning element 24a is provided with a positioning portion 73 for positioning the screen protector 22. Optionally, the enclosed space of the side board 722 and the top board 721 defines the positioning portion 73, and the size of the enclosed space is matched with that of the screen protector 22, thereby initially positioning the screen protector 22 within the auxiliary positioning element 24a.

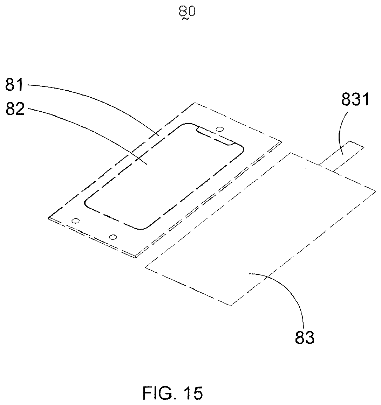

Referring to FIG. 15, in some other embodiments, a viscose structure is provided on the surface of the top board 721 facing the screen of the electronic device 20 to form a positioning portion 73. In this case, the viscosity of viscose structure is less than that of the screen protector 22 and the film pasted on the screen of the electronic device 20.

As a variant embodiment, the space enclosed by the side board 722 and the top board 721 defines a positioning portion 73, and the size of the enclosed space is greater than that of the screen protector 22. In this case, a positioning line may be disposed in the top board 721 to mark the attachment position of the screen protector 22, and the accommodating space 131 may also be configured to position the auxiliary positioning element 24a and align the screen protector 22 with the screen of the electronic device 20.

Referring to FIG. 13 again, a lug 76 may also be provided at the side board 722 corresponding to the lengthwise end of the auxiliary positioning element 24a to obliquely position the positioning plane with respect to the placing plane. That is, the lug 76 is disposed at one end of the side board 722 away from the rolling member 40.

Where the lug 76 is disposed on the side board 722, specifically, where the lug 76 is disposed on the inner surface of the side board 722, the lug 76 abuts against the electronic device 20, such that the height of the end thereof having the lug 76 is higher than that of the rolling member 40 by a certain height, and the positioning plane is inclined with respect to the placing plane.

Optionally, the lug 76 or the first positioning member 32b may be made of silica gel, rubber, etc. The lug 76 is resilient, and the auxiliary positioning element 76 is pressed and deformed during the pressing process of the rolling member 40 to the top board 721 of the auxiliary positioning element 24a, such that the side of the auxiliary positioning element 24a away from the rolling member 40 is also covered on the surface of the electronic device 20 during the film-pasting process, thus completing the sticking of the film.

Referring to FIG. 15, a third embodiment of the present disclosure provides a film 80 adapted to the screen protector pasting box of the first embodiment and the variant embodiments thereof and the second embodiment. The screen protector pasting box 80 may be used to attach the film 80 onto the electronic device 20. The film 80 includes an auxiliary positioning element 81, a screen protector 82 and a release film 83. For the convenience of tearing off the release film 83, a tip 831 may be provided.

In some embodiments, the auxiliary positioning element 81, the screen protector 82, and the release film 83 may be sequentially superimposed in a three-layer structure. Or, the auxiliary positioning element 81 is provided with a cavity for accommodating the screen protector 82, and the release film 83 is attached to the side of the screen protector 82 attached to the screen of the electronic device 20.

The above descriptions are only preferred embodiments of the present disclosure and are not intended to limit the present disclosure. Any modifications, equivalent replacements and improvements made within the principles of the present disclosure should all be included within the protection scope of the present disclosure.

## Claims

1. A screen protector pasting box for pasting a film to an electronic device, the film comprising an auxiliary positioning element and a screen protector connected to the auxiliary positioning element; the screen protector pasting box comprising a connecting member, an upper housing, a lower housing, a rolling member, two guide rails and a slider; the upper housing can be covered on the lower housing; the connecting member being connected to and accommodated in the lower housing; the connecting member being used for accommodating an electronic device to be pasted; the connecting member being provided with a positioning portion thereon for positioning the auxiliary positioning element of the film;
the guide rails being disposed on two opposite inner sides of the lower housing respectively, and the rolling member can slide with respect to the guide rails; two sides of the upper housing facing the guide rails being connected to the slider, and the slider being rotatably connected to the rolling member; the slider can slide with respect to the guide rails, and two sides of the upper housing connected to the slider being disposed between the guide rails.

2. The screen protector pasting box of claim 1, wherein one end of the upper housing connected to the slider is rotatably connected to the lower housing, and the other end thereof can be opened or closed with respect to the lower housing.

3. The screen protector pasting box of claim 2, wherein the slider is cylindrical and rotatably connected to the guide rails.

4. The screen protector pasting box of claim 1, wherein the screen protector pasting box further comprises a limiting element disposed at a position of the upper housing close to the slider; the connecting member defining a recess corresponding to the limiting element; when the slider slides to one end of the guide rails, the limiting element being rotatably against the recess, and the upper housing being covered in the lower housing.

5. The screen protector pasting box of claim 4, wherein two slots are defined by the connecting member, two sides of the lower housing and the two guide rails; the slots being used for the limiting element being movably received therein.

6. The screen protector pasting box of claim 1, wherein a surface where the lower housing is connected to the electronic device is defined as a placing plane, and a surface where the positioning portion is connected to the auxiliary positioning element is defined as a positioning plane; the positioning plane and the placing plane being relatively inclined; the rolling member can slide from one side with a smaller angle between the positioning plane and the placing plane to another side with a larger angle therebetween.

7. The screen protector pasting box of claim 6, wherein the connecting member defines an accommodating space thereon for accommodating the electronic device; the positioning portion comprising a first positioning member or a first positioning hole disposed at one end of the connecting member; the auxiliary positioning element comprising a through hole corresponding to the first positioning member, or comprising a connecting column corresponding to the first positioning hole.

8. The screen protector pasting box of claim 7, wherein the positioning portion further comprises a second positioning member, and the first positioning member and the second positioning member are disposed on two opposite ends of the connecting member;
or, the positioning portion further comprising a second positioning hole, and the first positioning hole and the second positioning hole being disposed on two opposite ends of the connecting member; or, the first positioning member and the second positioning hole being disposed on two opposite ends of the connecting member; or, the first positioning hole and the second positioning member being disposed on two opposite ends of the connecting member;
the auxiliary positioning element comprising a through hole corresponding to the second positioning member, or comprising a connecting column corresponding to the second positioning hole.

9. The screen protector pasting box of claim 8, wherein the positioning plane comprises a first locating surface; or the positioning plane comprising the first locating surface and a second locating surface;
the first positioning member or the first positioning hole defining the first locating surface, and the second positioning member or the second positioning hole defining the second locating surface; the auxiliary positioning element being positioned on the first locating surface, or positioned on the first locating surface and the second locating surface.

10. The screen protector pasting box of claim 9, wherein when the positioning plane only comprises the first positioning member or the first positioning hole, the positioning plane comprises a first locating surface; when the electronic device is placed in the accommodating space, the height of the first locating surface being higher than that of the screen of the electronic device, and the placing plane being parallel to a horizontal plane;
or, the height of the first locating surface being equal to that of the second locating surface, and the placing plane forming an angle with a horizontal plane; or, the height of the first locating surface being higher than that of the second locating surface, and the placing plane being parallel to a horizontal plane.

11. The screen protector pasting box of claim 8, wherein the first positioning member is closely matched with the through hole.

12. The screen protector pasting box of claim 2, wherein the film can be placed in a space formed by the upper housing closed on the lower housing.

13. The screen protector pasting box of claim 8, wherein the number of the first positioning members or the number of the first positioning holes is two, and the number of the second positioning member or the number of the second positioning hole is one.

14. The screen protector pasting box of claim 1, wherein the rolling member comprises a first rolling part and a second rolling part disposed at two ends of the first rolling part, and the hardness of the second rolling part is higher than that of the first rolling part; or the second rolling part protruding with respect to the first rolling part.

15. The screen protector pasting box of claim 1, wherein the connecting member is detachably connected to the lower housing.
